# EUROPÄISCHE PATENTANMELDUNG

(11) **EP 4 289 278 A1**
(43) Veröffentlichungstag der Anmeldung: **13.12.2023**
(21) Anmeldenummer: 22177813.7
(22) Anmeldetag: 08.06.2022
(51) Int. Cl.: A23C 20/02

(54) **VEGANE KÄSEALTERNATIVE**

(71) Anmelder: DMK Deutsches Milchkontor GmbH, 27404 Zeven (DE)
(72) Erfinder: STADLER, Christian, 27404 Zeven (DE); POMMER, Jan, 26817 Rhauderfehn (DE)
(74) Vertreter: Fabry, Bernd

(57) **Zusammenfassung**

Vorgeschlagen wird ein veganes Lebensmittelprodukt, insbesondere eine vegane Käsealternative, dessen Herstellungsverfahren sowie ein Nahrungsmittelprodukt zum Heißverzehr umfassend ein solches veganes Lebensmittelprodukt.

## Beschreibung

### GEBIET DER ERFINDUNG

Die Erfindung befindet sich auf dem Gebiet der Lebensmitteltechnologie und betrifft ein veganes Lebensmittelprodukt, insbesondere eine vegane Käsealternative, sowie deren Herstellungsverfahren.

### TECHNOLOGISCHER HINTERGRUND

Das Bewusstsein für eine gesunde Ernährungsweise ist in den letzten Jahren unter Verbrauchern kontinuierlich gestiegen. So beinhaltet eine gesunde Ernährungsweise das Bereitstellen aller wichtigen Nährstoffe für den Körper ohne übermäßigen Konsum von Fetten, Salz und Zucker.

Neben einer gesunden und ausgewogenen Ernährung rückt auch immer mehr das Thema der überwiegenden pflanzlichen Ernährung in den gesellschaftlichen Fokus. Ein Umschwung auf eine vegetarische Lebensweise besitzt demnach einen positiven Einfluss auf das Klima. Bei Vermeidung von Fleisch als Teil der Ernährung kann vermeiden werden, dass eine große Menge CO₂ freigesetzt wird.

Die Nachfrage nach veganen Lebensmitteln stellt somit einen sehr attraktiven und wachstumsstarken Markt für die Lebensmittelhersteller dar. Hinzu kommt, dass gerade die sich vegan ernährenden Konsumenten sehr viel Wert auf eine natürliche Erzeugung der Lebensmittel legen und daher bevorzugt auf BIO-Lebensmittel zurückgreifen.

Im Bereich der veganen Käse-Alternativen ist das Angebot insgesamt jedoch überschaubar und teilweise nicht überzeugend im Hinblick auf Sensorik, Deklaration, Nährwert, BIO-Qualität und Funktionalität.

Gegenstand der WO2020089383 A1 ist ein veganer Käseersatz, welcher auf Basis von Ballaststoffen, Calcium, Lipiden und Pflanzenprotein hergestellt wird.

Das Dokument EP3213638 A1 offenbar ein Käseanalogon, welches Wasser, eine Wurzel- oder Knollenstärke, natürliches Kartoffelprotein und eine Fettkomponente umfasst.

Allgemein werden von Konsumenten bei den derzeitig auf dem Markt vorhandenen Produkten unter anderem die Konsistenz und das Mundgefühl als wenig überzeugend genannt. Die Konsistenz der veganen Käse-Alternativen ist im Vergleich zum Naturkäse weniger elastisch und eher spröde. Das Mundgefühl bewerten die meisten Konsumenten als nicht saftig und nicht cremig genug. Es ist daher davon auszugehen, dass eine Verbesserung der sensorischen Eigenschaften zu einer höheren Konsumentenakzeptanz führen würde.

Die Verwendungsanlässe von veganen Käse-Alternativen entsprechen denen von Käse: Sie werden als Brotbelag und zum Überbacken z. B. bei Aufläufen und Pizzen verwendet. Jedoch sind die Überbackeigenschaften der am Markt angebotenen veganen Käse-Alternativen unzureichend, da sie kaum schmelzen und somit beim Überbacken nicht verlaufen. Eine vegane Käse-Alternative mit käseähnlichen Schmelz- und Überbackeigenschaften würde somit eine Bereicherung für den sich vegan ernährenden Konsumenten darstellen.

Weiterhin basieren viele der veganen Käse-Alternativen auf Lebensmittelstärken, Pflanzenfett und Bindemittel. Proteinreiche Lebensmittel werden gar nicht oder nur in kleinen Mengen eingesetzt, sodass der Proteingehalt der veganen Käse-Alternativen sehr gering ist. Ein höherer Proteingehalt ist jedoch insofern wünschenswert, als dadurch eine ausgewogenere und gesündere Ernährung erzielt werden könnte.

Um die veganen Käse-Alternativen ernährungsphysiologisch aufzuwerten und sensorisch zu verbessern, wurden in den letzten Jahren insbesondere Produkte mit einem geringen Pflanzenproteingehalt meist unter 2 % auf den Markt gebracht. Höhere Proteinkonzentrationen sind insbesondere mit Pflanzenproteinen in Kombination mit Stärke nach jetzigem Erkenntnisstand schwer zu erreichen, da dadurch keine käseähnliche Konsistenz aufgebaut werden kann. Ferner waren die Produkte nicht schnittfähig, erzeugten ein raues Mundgefühl und hatten ein mattes käseuntypisches Aussehen.

Eine Aufgabe der vorliegenden Erfindung hat daher darin bestanden, ein veganes Lebensmittelprodukt - insbesondere eine vegane Käsealternative, welche vorzugsweise einen Mozzarella-Charakter aufweisen soll - welches gute Eigenschaften hinsichtlich Konsistenz und Geschmack, Stretch und Bräunung haben, gute Überbackeigenschaften mit einem käseähnlichen Schmelzen erreichen.

Ein solches Lebensmittelprodukt sollte auch wenig Zusatzstoffe bzw. keine Zusatzstoffe mit Gesundheitsrisiken enthalten und einen hohen Proteingehalt aufweisen.

### BESCHREIBUNG DER ERFINDUNG

Ein erster Gegenstand der Erfindung betrifft ein veganes Lebensmittelprodukt enthaltend
(i) etwa 15 bis etwa 35 Gew.-% einer Pflanzen-abstammenden Fettkomponente;
(ii) etwa 15 bis etwa 35 Gew.-% native Stärke;
(iii) etwa 0,5 bis etwa 3 Gew.-% (Koch-)Salz;
(iv) etwa 0,1 bis etwa 2 Gew.-% Gelierungsmittel;
(v) etwa 0,1 bis etwa 2 Gew.-% Kohlenhydrate;
(vi) etwa 0,1 bis etwa 6 Gew.-% pflanzliche Proteine;
(vii) etwa 0,1 bis etwa 1,5 Gew.-% Aromen, Gewürze und/oder Farbstoffe;
(viii) 0 bis etwa 5 Gew.-% weitere Nahrungsmittelbestandteile,
mit der Maßgabe, dass sich alle Mengenangaben mit Wasser zu 100 Gew.-% ergänzen.

In einer bevorzugten Ausführungsform enthält das erfindungsgemäße Lebensmittelprodukt
(i) etwa 20 bis etwa 25 Gew.-% einer Pflanzen-abstammenden Fettkomponente;
(ii) etwa 20 bis etwa 25 Gew.-% modifizierte Stärke;
(iii) etwa 1 bis etwa 1,7 Gew.-% (Koch-)Salz;
(iv) etwa 0,2 bis etwa 0,6 Gew.-% Gelierungsmittel;
(v) etwa 0,3 bis etwa 0,6 Gew.-% Kohlenhydrate;
(vi) etwa 2 bis etwa 4 Gew.-% pflanzliche Proteine;
(vii) etwa 0,1 bis etwa 1,5 Gew.-% Aromen, Gewürze und/oder Farbstoffe;
(viii) 0 bis etwa 5 Gew.-% weitere Nahrungsmittelbestandteile,
mit der Maßgabe, dass sich alle Mengenangaben mit Wasser zu 100 Gew.-% ergänzen.

Überraschenderweise wurde gefunden, dass das erfindungsgemäße Lebensmittelprodukt die eingangs geschilderte umfangreiche Aufgabe vollständig erfüllt. Die spezifische Kombination der Komponente i) bis viii) führt zu einem veganen Lebensmittelprodukt, insbesondere zu einer veganen Käsealternative, die Schmelz- und Überbackeigenschaften aufweist, die ähnlich zu diejenigen von Käse sind, so dass diese vegane Käsealternative sich z.B. bei Aufläufen und Pizzen eignen.

Darüber hinaus wurde überraschenderweise gefunden, dass die typisch von der Proteinquellen abstammenden bräunlichen Farbe im erfindungsgemäßen veganen Lebensmittelprodukt nicht zu beobachten ist.

Das erfindungsgemäße Lebensmittelprodukt lässt sich zudem durch die optionale Zugabe weiterer Nahrungsmittelbestandteile (Komponente viii)) beliebig ergänzen bzw. geschmacklich abändern und ist technisch einfach herzustellen.

In einer bevorzugen Ausführungsform handelt es sich beim erfindungsgemäßen Lebensmittelprodukt um eine vegane Käsealternative, vorzugsweise um eine vegane Käsealternative mit Mozzarella-Charakter.

Alle Bestandteile sind des erfindungsgemäßen Lebensmittelprodukts, einschließlich aller optionalen Bestandteile, für Veganer akzeptabel. Weiter bevorzugt sind alle Bestandteile des Käses, einschließlich aller fakultativen Bestandteile, "*Clean*-*Label*"-Bestandteile. Insbesondere für gesundheitsbewusste Verbraucher, wie z. B. Veganer, bieten solche "Clean-Label"-Erzeugnisse Vorteile gegenüber Erzeugnissen, die Zutaten enthalten, die *"chemisch", "künstlich"* oder *"verarbeitet"* erscheinen. Daher ist das erfindungsgemäße Lebensmittelprodukt vorzugsweise ein *"Clean*-*Label"*-Produkt*.*

Wie bereits ausgeführt, enthält das erfindungsgemäße Lebensmittelprodukt eine Pflanzen-abstammenden Fettkomponente.

In Sinne der vorliegenden Erfindung handelt es sich bei der Fettkomponente um jede Art von Fett oder Öl pflanzlichen Ursprungs, die für den menschlichen Verzehr geeignet ist.

In Sinne der vorliegenden Erfindung Fett oder Öl ist eine Zusammensetzung, die mindestens 95 Gew.-%, vorzugsweise mindestens 98 Gew.-%, Di- und Triglyceride enthält, und ist vorzugsweise eine Zusammensetzung, die im Wesentlichen nur Triglyceride enthält, wobei die Menge an Diglyceriden weniger als 2 Gew.-%, vorzugsweise weniger als 1 Gew.-%, beträgt. Der Unterschied zwischen einem Fett und einem Öl besteht darin, dass ein Fett bei 20 °C fest ist, während ein Öl bei dieser Temperatur flüssig ist. Flüssig bedeutet in diesem Zusammenhang, dass die Viskosität so beschaffen ist, dass das Öl fließen kann, auch wenn es sich um eine viskose Flüssigkeit handeln kann.

In einer bevorzugten Ausführungsform ist die Pflanzen-abstammende Fettkomponente, die im Sinne der vorliegenden Erfindung als Komponente (i) in Frage kommen, ausgewählt aus der Gruppe bestehend aus Kakaobutter, Kokosöl, Palmöl, Palmkernöl, Kokosfett, Nussöl, Sheabutter, Aprikosenöl, Sojalecithin, Sonnenblumenöl, Sojaöl, Rapsöl oder Mischungen daraus. In Sinne der vorliegenden Erfindung fallen unter den Begriff "Nussöl" alle möglichen Pflanzen-abstammende Fettkomponente, die für den Fachmann als "Nussöle" zu verstehen sind, beispielweise Walnussöl, Haselnussöl, Mandelöl, Pistazienöl, Cashewöl, Pinienkernöl, Erdnussöl oder Macadamianussöl. In einer weiteren bevorzugten Ausführungsform ist die Pflanzen-abstammende Fettkomponente ausgewählt aus der Gruppe bestehend aus Kokosöl, Palmöl, Palmkernöl, Kokosfett, Sheabutter, Sonnenblumenöl, Sojaöl, Rapsöl oder Mischungen daraus.

In einer weiteren bevorzugten Ausführungsform umfasst oder besteht die Pflanzen-abstammende Fettkomponente aus einer Mischung aus Kokosfett und Sheabutter.

Es konnte festgestellt werden, dass eine Mischung aus Kokosfett und Sheabutter besonders vorteilhaft ist. Das Endprodukt, welches nicht ölig ist, ist vollmundiger und weist verbesserte Anwendungseigenschaften auf, insbesondere wenn es um Überbacken-Anwendungen geht.

In einer besonders bevorzugten Ausführungsform, umfasst oder besteht die Pflanzen-abstammende Fettkomponente aus einer Mischung aus Kokosfett und Sheabutter, wobei das Gewichtsverhältnis Kokosfett: Sheabutter etwa 90:10 beträgt, vorzugsweise etwa 80:20, und insbesondere etwa 70:30.

Wie bereits ausgeführt, enthält das erfindungsgemäße Lebensmittelprodukt native Stärke.

Im Sinne der vorliegenden Erfindung bedeutet native Stärke eine native, körnige Stärke, wie sie aus der Wurzel oder Knolle gewonnen wird. Der Vorteil der Verwendung einer nicht modifizierten oder nativen Stärke besteht darin, dass solche Stärken kennzeichnungsfrei in Lebensmitteln verwendet werden können, was für ein veganes Lebensmittelprodukt, insbesondere eine vegane Käsealternative, der auf gesundheitsbewusste Verbraucher abzielt, ein Vorteil ist.

In einer besonders bevorzugten Ausführungsform sind die native Stärke, die im Sinne der vorliegenden Erfindung als Komponente (ii) in Frage kommen, ausgewählt aus der Gruppe bestehend aus Kartoffel-, Mais-, Reis-, Weizen- und Tapiokastärke oder Mischungen daraus.

Stärke weist normalerweise je nach Ursprung einen Amyloseanteil von 14 % bis 27 %, sowie einen Amylopektinanteil von 73 % bis 86 % auf.

Es konnte festgestellt werden, dass eine Mischung aus mindestens zwei verschiedenen nativen Stärken besonders vorteilhaft ist, da das Verhältnis Amylose und Amylopektin dadurch variiert werden kann. Das hat sich als sehr positiv erwiesen, insbesondere was Wasserbindung, Mouthfeeling anbelangt. So lassen sich diese Eigenschaften des Endproduktes *"modulieren",*je nach Anwendung des Endproduktes.

Demzufolge, in einer bevorzugten Ausführungsform, ist die Komponente (ii) eine Mischung aus zwei verschiedenen nativen Stärken, nämlich Stärke 1 und Stärke 2.

In einer in besonders bevorzugten Ausführungsform, ist die Komponente (ii) eine Mischung aus Stärke 1 und Stärke 2, wobei das Gewichtsverhältnis Stärke 1: Stärke 2 von etwa 5:1 bis etwa 3:1 beträgt.

Wie bereits ausgeführt, enthält das erfindungsgemäße Lebensmittelprodukt ein Gelierungsmittel.

In einer bevorzugten Ausführungsform ist das Gelierungsmittel, welches im Sinne der vorliegenden Erfindung als Komponente (iv) in Frage kommt, ausgewählt aus der Gruppe bestehend aus Agar-Agar (E 406), Carrageen (E 407), Gellan (E 418), Cellulose (E 460), Methylcellulose (E 461), Natriumalginat (E 401) oder Mischungen daraus, vorzugsweise aus der Gruppe bestehend aus Carrageen (E 407), Gellan (E 418) und Natriumalginat (E 401) oder Mischungen daraus.

Es konnte festgestellt werden, dass Carrageen in Hinblick auf die Konsistenz und Stretch besonders vorteilhaft ist.

Demzufolge ist - in einer weiteren besonderen bevorzugten Ausführungsform- das Gelierungsmittel Carrageen.

Wie bereits ausgeführt, enthält das erfindungsgemäße Lebensmittelprodukt Kohlenhydrate.

In einer bevorzugten Ausführungsform sind die Kohlenhydrate, die im Sinne der vorliegenden Erfindung als Komponente (v) in Frage kommen, ausgewählt aus der Gruppe bestehend aus Allulose, Tagatose, Cellobiose, Xylose, Xylulose, Ribose, Ribulose, Sorbose, Allose, Altrose, Arabinose, Mannose, Gulose, Idose, Galactose, Talose, Nigerose, Kojibiose, Fructose, lactose, Dextrose, Saccharose, Maltodextrin und deren Gemischen, vorzugsweise aus der Gruppe bestehend aus Allulose, Xylulose, Ribose, Arabinose, Mannose, Galactose, Fructose, Lactose, Dextrose, Saccharose, Maltodextrin und deren Gemischen.

Es konnte festgestellt werden, dass Dextrose oder Maltodextrin in Hinblick auf den Geschmack und Bräunung besonders vorteilhaft ist, da die Bildung von Abbauprodukten mittels beispielweise Karamellisierungsprozesse oder Maillard-Reaktionen bei der Anwendung des Endprodukts bspw. beim Schmelzen minimiert werden.

Demzufolge sind - in einer weiteren besonderen bevorzugten Ausführungsform- die Kohlenhydrate ausgewählt aus der Gruppe bestehend aus Dextrose und Maltodextrin und deren Gemischen.

Wie bereits ausgeführt, enthält das erfindungsgemäße Lebensmittelprodukt pflanzliche Proteine.

In einer bevorzugten Ausführungsform sind die pflanzliche Proteine, die im Sinne der vorliegenden Erfindung als Komponente (vi) in Frage kommen, ausgewählt aus der Gruppe bestehend aus Sojaprotein, Lupinenprotein, Rapsprotein, Erbsenprotein, Reisprotein, Mandelprotein, oder einer Mischung davon, die einen hohen Proteingehalt in der Trockenmasse aufweisen und gleichzeitig einen geringen Balllaststoffgehalt haben, besonders geeignet sind, wie z. B. Soja-, Lupinen-, Raps-, Erbsen- und Reisprotein mit einem Proteingehalt größer 80 % oder Mandelprotein mit einem Proteingehalt von ca. 50 %. Dabei kann es sich um fermentierte oder unfermentierte Proteine handeln.

Wie bereits ausgeführt, enthält das erfindungsgemäße Lebensmittelprodukt Aromen, Gewürze und/oder Farbstoffe (Komponente (vii)).

Die Natur dieser Zusatzstoffe ist im Sinne der Erfindung wenig kritisch und wird im Wesentlichen durch die geschmacklichen Vorgaben bestimmt. Diese Zusatzstoffe müssen nur die Voraussetzung erfüllen, dass sie kompatibel in einem veganen Lebensmittelprodukt, insbesondere in einer veganen Käsealternative sind. Diese Zusatzstoffe sind für den Fachmann bestens bekannt, und müssen daher nicht weiter spezifiziert werden.

Die Auswahl der weiteren Nahrungsmittelbestandteile, die als fakultative Komponente (viii) vorhanden sein können, ist unkritisch und wird nur durch Einsatzzweck, Geschmack oder Optik bestimmt. Diese Zusatzstoffe sind für den Fachmann bestens bekannt, und müssen daher nicht weiter spezifiziert werden.

Ein weiterer Bestandteil des erfindungsgemäßen Lebensmittelprodukts ist Wasser. Das Wasser ist vorzugsweise Leitungswasser, das für die Verwendung in Lebensmitteln geeignet ist. Das heißt, das Wasser muss ausreichend sauber sein, und sollte keine überschüssigen Salze, Mikroorganismen oder toxischen Bestandteile enthalten. In einer bevorzugten Ausführungsform ist das Wasser mikrofiltriertes Wasser. Wasser wird in einer solchen Menge verwendet, dass sich alle Bestandteile des Lebensmittelprodukts zu 100 Gew.-% addieren.

Ein weiterer Gegenstand der vorliegenden Erfindung betrifft ein Verfahren zur Herstellung des erfindungsgemäßen veganen Lebensmittelprodukts umfassend oder bestehend aus den folgenden Schritten:
(a) Bereitstellen von erwärmtem Wasser, wobei das Wasser eine Temperatur ≥30 °C und < 60 °C aufweist;
(b) Zugabe von Salz zum Wasser aus Schritt (a) unter Rühren, wobei die Temperatur während und am Ende der Zugabe in dem Schritt (a) definierten Bereich liegt;
(c) Zugabe eines Gelierungsmittels zum Zwischenprodukt des Schrittes (b) unter Rühren, wobei die Temperatur während und am Ende der Zugabe in dem Schritt (a) definierten Bereich liegt;
(d) Erhitzen des Zwischenprodukts des Schritts (c) unter Rühren auf eine Temperatur ≥ 60 °C und ≤ 90 °C;
(e) Zugabe einer Pflanzen-abstammenden Fettkomponente zum Zwischenprodukt des Schrittes (d) unter Rühren, wobei die Temperatur während und am Ende der Zugabe in dem Schritt (d) definierten Bereich liegt;
(f) Erhitzen des Zwischenprodukts des Schritts (e) auf eine Temperatur ≥ 60 °C und ≤ 90 °C unter Rühren, jedoch aber höher als die Temperatur der Schritte (d) bis (e);
(g) Zugabe von:
   - mindestens einer nativen Stärke,
   - Kohlenhydrate, die verschieden von Stärke sind, und
   - pflanzlichen Proteinen; zum Zwischenprodukt des Schrittes (f) unter Rühren, wobei die Temperatur während und am Ende der Zugabe in dem Schritt (f) definierten Bereich liegt;
(h) Erhitzen des Zwischenprodukts des Schritts (g) auf eine Temperatur ≥ 60 °C und ≤ 100 °C unter Rühren, jedoch höher als die Temperatur der Schritte (d) bis (g);
(i) Zugabe von Aromen, Gewürze und/oder Farbstoffe und optional von weiteren Nahrungsmittelbestandteilen zum Zwischenprodukt des Schrittes (h) unter Rühren, wobei die Temperatur während und am Ende der Zugabe in dem Schritt (h) definierten Bereich liegt;
(j) Heißhaltung der Zusammensetzung des Schrittes (i) bei der Temperatur des Schrittes
   (i) unter Rühren über einen Zeitraum von etwa 2 bis etwa 10 Minuten;
(k) Abkühlen auf eine Temperatur im Bereich von etwa 30°C bis etwa 50 °C;
(I) Zugabe von Starterkulturen und/oder Lab zum Zwischenprodukt des Schrittes (k);
   und
(m1) Abfüllung des im Schritt (I) erhaltenen Produktes;
   oder
(m2) Zwischenlagerung in einem Tank unter sterilen Bedingungen des im Schritt (I) erhaltenen Produktes und nachfolgende Abfüllung.

Überraschenderweise wurde gefunden, dass nur mittels der erfindungsgemäßen Kombination oder Reihenfolge der Schritte (a) bis (m1) bzw. (m2) zusammen mit der Auswahl der spezifischen Inhaltsstoffe die Gewinnung eines vegane Lebensmittelprodukts, insbesondere einer veganen Käsealternative, mit den gewünschten Eigenschaften gewährleistet wird. Verwendet man die Inhaltstoffe in einer anderen Reihenfolge oder hält man sich nicht an die Herstellungsbedingungen, wird das gewünschte Produkt nicht erhalten.

Bezüglich der verschiedenen Inhaltsstoffe, die in diesem Verfahren eingesetzt werden, gelten die vorhergehenden Ausführungen (vgl. Absätze [0014] - [0047]). Demzufolge gelten da beispielweise die vorhergehenden Definitionen, Mengenangaben und Gewichtsverhältnisse.

In einer bevorzugten Ausführungsform weist das Wasser im Schritt (a) eine Temperatur ≥45 °C und < 60 °C auf, vorzugsweise eine Temperatur im Bereich von etwa 50 °C bis etwa 55 °C.

In einer weiteren bevorzugten Ausführungsform ist die Temperatur der Schritte (a) und (b) gleich.

In einer weiteren bevorzugten Ausführungsform ist die Temperatur der Schritte (a) und (c) gleich.

In einer besonderen bevorzugten Ausführungsform ist die Temperatur der Schritte (a), (b) und (c) gleich. Das hat sich als besonders vorteilhaft in Hinblick auf die Stabilität des Zwischenprodukts des Schrittes (c) erwiesen, da dadurch dieses Zwischenprodukts des Schrittes (c) eine homogene Mischung darstellt, und es zu keiner Phasentrennung kommt.

In einer bevorzugten Ausführungsform wird in dem Schritt (d) auf eine Temperatur ≥ 60 °C und ≤ 80 °C erhitzt, vorzugsweise auf eine Temperatur ≥ 60 °C und ≤ 70 °C, insbesondere bevorzugt auf eine Temperatur ≥ 60 °C und ≤ 65 °C.

In einer weiteren bevorzugten Ausführungsform ist die Temperatur der Schritte (d) und (e) gleich; das hat sich als besonders vorteilhaft in Hinblick auf die Stabilität des Zwischenprodukts des Schrittes (e) erwiesen, da dadurch dieses Zwischenprodukts des Schrittes (e) eine homogene Mischung darstellt, und es zu keiner Phasentrennung kommt, aber auch in Hinblick das Gefüge des Endproduktes.

In einer bevorzugten Ausführungsform wird in dem Schritt (f) auf eine Temperatur ≥ 70 °C und ≤ 80 °C erhitzt, vorzugsweise auf eine Temperatur von etwa 75°C

In einer weiteren bevorzugten Ausführungsform ist die Temperatur der Schritte (f) und (g) gleich.

In einer bevorzugten Ausführungsform erfolgt die Zugabe der nativen Stärke, Kohlenhydrate und pflanzlichen Proteinen im Schritt (g) gleichzeitig.

Es konnte festgestellt werden, dass der zusätzliche Erhitzen-Schritt (Schritt (h) des Verfahrens) besonders vorteilhaft ist. Das hat sich auch als besonders vorteilhaft in Hinblick auf die Stabilität des Zwischenprodukts erwiesen, da dadurch dieses Zwischenprodukts eine homogene Mischung darstellt, und es zu keiner Phasentrennung kommt, aber auch in Hinblick das Gefüge des Endproduktes.

In einer bevorzugten Ausführungsform wird in dem Schritt (h) auf eine Temperatur ≥ 70 °C und ≤ 95 °C erhitzt, vorzugsweise auf eine Temperatur ≥ 80 °C und ≤ 90 °C, insbesondere bevorzugt auf eine Temperatur ≥ 83 °C und ≤ 87 °C.

In einen besonderen Ausführungsform wird in dem Schritt (h) auf eine Temperatur von etwa 85 °C erhitzt.

In einer weiteren bevorzugten Ausführungsform ist die Temperatur der Schritte (h) und (i) gleich. Das hat sich auch als besonders vorteilhaft in Hinblick auf die Stabilität des Zwischenprodukts erwiesen, da dadurch dieses Zwischenprodukts eine homogene Mischung darstellt, und es zu keiner Phasentrennung kommt, aber auch in Hinblick das Gefüge des Endproduktes.

Ebenso ausschlaggebend für die gute Qualität des Endproduktes hat sich die Heißhaltung des Zwischenproduktes des Schrittes (i) bei einer bestimmten Temperatur und für einen bestimmten Zeitraum. Das hat sich auch als besonders vorteilhaft in Hinblick auf die Stabilität des Zwischenprodukts erwiesen, da dadurch dieses Zwischenprodukts eine homogene Mischung darstellt, und es zu keiner Phasentrennung kommt, aber auch in Hinblick das Gefüge des Endproduktes.

In einer bevorzugten Ausführungsform erfolgt die Zugabe Aromen, Gewürze und/oder Farbstoffen im Schritt (i) gleichzeitig.

In einer bevorzugten Ausführungsform erfolgt die Heißhaltung des Schrittes (j) über einen Zeitraum von etwa 3 bis etwa 8 Minuten, insbesondere bevorzugt über einen Zeitraum von etwa 4 bis etwa 5 Minuten. Im Sinne der vorliegenden Erfindung bedeutet Heißhaltung, dass die Temperatur im Schritt (j) die gleiche ist wie im Schritt (i).

Anschließend erfolgt eine Abkühlung auf eine Temperatur im Bereich von etwa 30°C bis etwa 50 °C (Schritt (k) des erfindungsgemäßen Verfahrens). Ziel dieses Schrittes ist das Zwischenprodukt auf die richtige Temperatur zu bringen, damit die nachfolgende Fermentierung optimal erfolgen kann.

In einer bevorzugten Ausführungsform wird in dem Schritt (k) auf eine Temperatur von etwa 35 °C bis etwa 45 °C abgekühlt, insbesondere bevorzugt auf eine Temperatur von etwa 40 °C.

In einer bevorzugten Ausführungsform erfolgt die Zugabe von Starterkulturen und/oder Lab bei einer Temperatur von etwa 40 °C.

Anschließend kann das Produkt direkt abgefüllt werden, so dass die Fermentation und die Reifung in der Verpackung erfolgt (Schritt (m1) des erfindungsgemäßen Verfahrens), oder das Produkt wird in einem dafür geeigneten Tank unter sterilen Bedingungen zwischengelagert, und nach Fermentation in der Verpackung abgefüllt wird, wo die Reifung erfolgt.

Es konnte festgestellt werden, dass die Leistung beim Rühren in den verschiedenen Schritten des erfindungsgemäßen Verfahrens insbesondere in Hinblick auf die Konsistenz und das Gefüge des Endproduktes von großer Bedeutung ist.

In einer bevorzugten Ausführungsform liegt die Drehzahl beim Rühren in den Schritten (a) bis (i) im Bereich von etwa 1600 bis etwa 2000 U/min, vorzugsweise von etwa 1700 bis etwa 1900 U/ min, und insbesondere 1800 U/ min.

In einer weiteren bevorzugten Ausführungsform liegt die Drehzahl beim Rühren im Schritt (j) im Bereich von etwa 1000 bis etwa 1500 U/ min, vorzugsweise von etwa 1200 bis etwa 1400 U/ min, und insbesondere 13000 U/ min.

In einer weiteren bevorzugten Ausführungsform umfasst das erfindungsgemäße Verfahren einen zusätzlichen Schritt, in dem das hergestellte vegane Lebensmittelprodukt gerieben wird.

Ein weiterer Gegenstand der vorliegenden Erfindung ist ein veganes Lebensmittelprodukt - insbesondere eine veganen Käsealternative - gemäß den Absätzen [0014] - [0047] erhältlich oder erhalten durch das Verfahren gemäß den Absätzen [0048] - [0074].

Ein weiterer Gegenstand der vorliegenden Erfindung ist ein Nahrungsmittelprodukt zum Heißverzehr umfassend ein veganes Lebensmittelprodukt wie in den Absätzen [0014] - [0047] definiert oder erhältlich durch das den Absätzen [0048] - [0074] beschriebenes Verfahren.

In einer bevorzugten Ausführungsform ist das Nahrungsmittelprodukt ausgewählt aus der Gruppe bestehend aus Pizza, Pasta, Lasagne, Croque Monsieur, Käseburger, Gratin, Fondue, Hot Dog, Waffel, Sandwich, Wrap, gebackener Käse, Tortilla Chip oder Käsesauce.

### BEISPIELE

Die vorliegende Erfindung wird unter Bezugnahme auf die nachstehenden Beispiele leichter zu verstehen sein.

Jedoch dienen diese Beispiele lediglich zur Veranschaulichung der Erfindung und können nicht als einschränkend in Bezug auf den Schutzbereich der Erfindung ausgelegt werden.

### BEISPIEL 1 (ERFINDUNGSGEMÄß)

Ein beispielhaftes veganes Lebensmittelprodukt gemäß der vorliegenden Erfindung wurde hergestellt, umfassend:

**- Tabelle 1 -**

| **Zutat** | **Menge (Gew.-%)** |
|---|---|
| (Koch-)Salz | 1,5 |
| Carrageen | 0,5 |
| Fettkomponente (Kokosfett : Sheabutter; 70:30) | 24 |
| Stärke 1 | 20,5 |
| Stärke 2 | 4,5 |
| Dextrose | 0,5% |
| Lupinenprotein (unfermentiert) | 3 |
| Aromen, Gewürze und Farbstoffe | 0,5 |
| Wasser | Zu 100 Gew.-% |

Das Produkt wurde nach dem Verfahren gemäß der vorliegenden Erfindung hergestellt. Die entsprechenden Prozessparameter werden in der Tabelle 2 zusammengefasst:

**- Tabelle 2 -**

| **Schritte des Verfahrens** | **Bedingungen** |
|---|---|
| (a) | 50-55 °C, 1800 U/min |
| (b) | 50-55 °C, 1800 U/min |
| (c) | 50-55 °C, 1800 U/min |
| (d) | 60-65 °C, 1800 U/min |
| (e) | 60-65 °C, 1800 U/min |
| (f) | 75 °C, 1800 U/min |
| (g)) | 75 °C, 1800 U/min |
| (h) | 85 °C, 1800 U/min |
| (i) | 85 °C, 1800 U/min |
| (j) | 85 °C, 1300 U/min, 4-5 min |
| (k) | 40 °C, 1300 U/min |

Das Produkt wurde abgefüllt und abgekühlt.

Das durch das Verfahren erhaltene Produkt (= P1) wies eine käseähnliche Konsistenz auf.

### BEISPIEL 2 (NICHT ERFINDUNGSGEMÄß)

Ein beispielhaftes veganes Lebensmittelprodukt wurde hergestellt, umfassend:

**- Tabelle 3 -**

| **Zutat** | **Menge (Gew.-%)** |
|---|---|
| (Koch-)Salz | 1,5 |
| Carrageen | 0,5 |
| Fettkomponente (Kokosfett : Sheabutter; 70:30) | 24 |
| Stärke 1 | 20,5 |
| Stärke 2 | 4,5 |
| Dextrose | 0,5% |
| Lupinenprotein (unfermentiert) | 3 |
| Aromen, Gewürze und Farbstoffe | 0,5 |
| Wasser | Zu 100 Gew.-% |

In diesem Fall wurde das Produkt wie folgt hergestellt:

In einem ersten Schritt wurden Wasser, Protein, Fettkomponente, die Stärke in einen geeigneten Behälter (bspw. Rührer mit Erhitzungsfunktion) gegeben. Die Zutaten wurden 1 min verrührt und anschließend auf 95 °C erhitzt, was etwa 10 min dauerte. Der Erhitzungsschritt wurde bei etwa 2.000 - 9.000 U/min durchgeführt. Nach Erreichen einer Temperatur von 95 °C wurden Carrageen, (Koch-)Salz, Kohlenhydrate und die Aromen, Gewürze und Farbstoffe dazugegeben. Die gesamte Masse wurde dann für 2 min unter starkem Rühren (8.000-12.000 U/min) homogenisiert. Nach dem Homogenisieren wurde die Masse in geeignete Portionen abgefüllt und abgekühlt.
Das erhaltene Produkt (= V1) wies eine käseähnliche Konsistenz auf.

### BEISPIEL 3 (NICHT ERFINDUNGSGEMÄß)

Ein beispielhaftes veganes Lebensmittelprodukt wurde hergestellt, umfassend:

**- Tabelle 4 -**

| **Zutat** | **Menge (Gew.-%)** |
|---|---|
| (Koch-)Salz | 1,5 |
| Carrageen | 0,5 |
| Fettkomponente (Kokosfett : Sheabutter; 70:30) | 24 |
| Modifizierte Stärke | 25 |
| Dextrose | 0,5% |
| Lupinenprotein (unfermentiert) | 3 |
| Aromen, Gewürze und Farbstoffe | 0,5 |
| Wasser | Zu 100 Gew.-% |

Das Produkt wurde nach dem Verfahren gemäß der vorliegenden Erfindung hergestellt. Die entsprechenden Prozessparameter werden in der Tabelle 2 zusammengefasst:

**- Tabelle 5 -**

| **Schritte des Verfahrens** | **Bedingungen** |
|---|---|
| (a) | 50-55 °C, 1800 U/min |
| (b) | 50-55 °C, 1800 U/min |
| (c) | 50-55 °C, 1800 U/min |
| (d) | 60-65 °C, 1800 U/min |
| (e) | 60-65 °C, 1800 U/min |
| (f) | 75 °C, 1800 U/min |
| (g)) | 75 °C, 1800 U/min |
| (h) | 85 °C, 1800 U/min |
| (i) | 85 °C, 1800 U/min |
| (j) | 95 °C, 1800 U/min, 12 min |
| (k) | 40 °C, 1300 U/min |

Das Produkt wurde abgefüllt und abgekühlt.

Das durch das Verfahren erhaltene Produkt (= V2) wies eine käseähnliche Konsistenz auf.

### EVALUIERUNG VON P1. V1 UND V2

Nach Lagerung wurden P1, V1 und V2 von einem Panel bestehend aus fünf erfahrenen und geschulten Testern in Hinblick auf die optischen (Bräunung), geschmacklichen Eigenschaften, Konsistenz und Überbackeigenschaften (nach Anwendung der Produkte in Herstellung einer Pizza Margherita). Die Ergebnisse sind in der Tabelle 6 zusammengefasst.

**Tabelle 6**

| **Beispiele** | **Geschmack** | **Konsistenz** | **Bräunung** | **Überbackeigenschaften** |
|---|---|---|---|---|
| P1 | 1 | 1 | x | 1 |
| V1 | 2 | 2 | x | 2 |
| V2 | 3 | 2 | √ | 3 |

**Bewertungsskala:**

| | |
|---|---|
| Geschmack | 1 bis 5, wobei 1 die maximale Bewertung bedeutet |
| Konsistent | 1 bis 5, wobei 1 die maximale Bewertung bedeutet |
| Bräunung | x= nicht festzustellen; √ = vorhanden |
| Überbackeigenschaften | 1 bis 5, wobei 1 die maximale Bewertung bedeutet |

Die experimentellen Daten zeigen, dass P1 (erfindungsgemäße Rezeptur und erfindungsgemäßes Verfahren) verbesserte Ergebnisse hinsichtlich Optik, Geschmack, Konsistenz und Überbackeigenschaften zeigt.

## Patentansprüche

1. Veganes Lebensmittelprodukt enthaltend
i) etwa 15 bis etwa 35 Gew.-% einer Pflanzen-abstammenden Fettkomponente;
ii) etwa 15 bis etwa 35 Gew.-% native Stärke;
iii) etwa 0,5 bis etwa 3 Gew.-% (Koch-)Salz;
iv) etwa 0,1 bis etwa 2 Gew.-% Gelierungsmittel;
v) etwa 0,1 bis etwa 2 Gew.-% Kohlenhydrate;
vi) etwa 0,1 bis etwa 6 Gew.-% pflanzliche Proteine;
vii) etwa 0,1 bis etwa 1,5 Gew.-% Aromen, Gewürze und/oder Farbstoffe;
viii) 0 bis etwa 5 Gew.-% weitere Nahrungsmittelbestandteile,
mit der Maßgabe, dass sich alle Mengenangaben mit Wasser zu 100 Gew.-% ergänzen.

2. Veganes Lebensmittelprodukt nach Anspruch 1, **dadurch gekennzeichnet, dass** die Pflanzen-abstammenden Fettkomponente (Komponente (i)) aus der Gruppe bestehend aus Kakaobutter, Kokosöl, Palmöl, Palmkernöl, Kokosfett, Nussöl, Sheabutter, Aprikosenöl, Sojalecithin, Sonnenblumenöl, Sojaöl, Rapsöl oder Mischungen daraus ausgewählt ist.

3. Veganes Lebensmittelprodukt nach einem der vorhergehenden Ansprüche, **dadurch gekennzeichnet, dass** die Pflanzen-abstammende Fettkomponente (Komponente (i)) eine Mischung aus Kokosfett und Sheabutter umfasst oder daraus besteht.

4. Veganes Lebensmittelprodukt nach einem der vorhergehenden Ansprüche, **dadurch gekennzeichnet, dass** die native Stärke (Komponente (ii)) aus der Gruppe bestehend aus Kartoffel-, Mais-, Reis-, Weizen- und Tapiokastärke oder Mischungen daraus ausgewählt ist.

5. Veganes Lebensmittelprodukt nach einem der vorhergehenden Ansprüche, **dadurch gekennzeichnet, dass** das Gelierungsmittel (Komponente (iv)) aus der Gruppe bestehend aus Agar-Agar, Carrageen, Gellan, Cellulose, Methylcellulose, Natriumalginat oder Mischungen daraus ausgewählt ist.

6. Veganes Lebensmittelprodukt nach einem der vorhergehenden Ansprüche, **dadurch gekennzeichnet, dass** die Kohlenhydrate (Komponente (v)) aus der Gruppe bestehend aus Allulose, Tagatose, Cellobiose, Xylose, Xylulose, Ribose, Ribulose, Sorbose, Allose, Altrose, Arabinose, Mannose, Gulose, Idose, Galactose, Talose, Nigerose, Kojibiose, Fructose, lactose, Dextrose, Saccharose, Maltodextrin und deren Gemische ausgewählt ist.

7. Veganes Lebensmittelprodukt nach einem der vorhergehenden Ansprüche, **dadurch gekennzeichnet, dass** die pflanzlichen Proteine (Komponente (vi) aus der Gruppe bestehend aus Sojaprotein, Lupinenprotein, Rapsprotein, Erbsenprotein, Reisprotein, Mandelprotein und deren Gemischen ausgewählt ist.

8. Verfahren zur Herstellung des veganen Lebensmittelprodukts nach einem der vorhergehenden Ansprüche umfassend oder bestehend aus den folgenden Schritten:
(a) Bereitstellen von erwärmtem Wasser, wobei das Wasser eine Temperatur ≥30 °C und < 60 °C aufweist;
(b) Zugabe von Salz zum Wasser aus Schritt (a) unter Rühren, wobei die Temperatur während und am Ende der Zugabe in dem Schritt (a) definierten Bereich liegt;
(c) Zugabe eines Gelierungsmittels zum Zwischenprodukt des Schrittes (b) unter Rühren, wobei die Temperatur während und am Ende der Zugabe in dem Schritt (a) definierten Bereich liegt;
(d) Erhitzen des Zwischenprodukts des Schritts (c) unter Rühren auf eine Temperatur ≥ 60 °C und ≤ 90 °C;
(e) Zugabe einer Pflanzen-abstammenden Fettkomponente zum Zwischenprodukt des Schrittes (d) unter Rühren, wobei die Temperatur während und am Ende der Zugabe in dem Schritt (d) definierten Bereich liegt;
(f) Erhitzen des Zwischenprodukts des Schritts (e) auf eine Temperatur ≥ 60 °C und ≤ 90 °C unter Rühren, jedoch aber höher als die Temperatur der Schritte (d) bis (e);
(g) Zugabe von:
• mindestens einer nativen Stärke,
• Kohlenhydrate, die verschieden von Stärke sind, und
• pflanzlichen Proteinen;
zum Zwischenprodukt des Schrittes (f) unter Rühren, wobei die Temperatur während und am Ende der Zugabe in dem Schritt (f) definierten Bereich liegt;
(h) Erhitzen des Zwischenprodukts des Schritts (g) auf eine Temperatur ≥ 60 °C und ≤ 100 °C unter Rühren, jedoch höher als die Temperatur der Schritte (d) bis (g);
(i) Zugabe von Aromen, Gewürze und/oder Farbstoffe und optional von weiteren Nahrungsmittelbestandteilen zum Zwischenprodukt des Schrittes (h) unter Rühren, wobei die Temperatur während und am Ende der Zugabe in dem Schritt (h) definierten Bereich liegt;
(j) Heißhaltung der Zusammensetzung des Schrittes (i) bei der Temperatur des Schrittes (i) unter Rühren über einen Zeitraum von etwa 2 bis etwa 10 Minuten;
(k) Abkühlen auf eine Temperatur im Bereich von etwa 30°C bis etwa 50 °C;
(I) Zugabe von Starterkulturen und/oder Lab zum Zwischenprodukt des Schrittes (k);
und
(m1) Abfüllung des im Schritt (I) erhaltenen Produktes; oder
(m2) Zwischenlagerung in einem Tank unter sterilen Bedingungen des im Schritt (I) erhaltenen Produktes und nachfolgende Abfüllung.

9. Verfahren nach Anspruch 8, **dadurch gekennzeichnet, dass** in dem Schritt (d) auf eine Temperatur ≥ 60 °C und ≤ 80 °C erhitzt wird.

10. Verfahren nach mindestes einem der vorhergehenden Ansprüche, **dadurch gekennzeichnet, dass** in dem Schritt (f) auf eine Temperatur ≥ 70 °C und ≤ 80 °C erhitzt wird.

11. Verfahren nach mindestes einem der vorhergehenden Ansprüche, **dadurch gekennzeichnet,** in dem Schritt (h) auf eine Temperatur ≥ 70 °C und ≤ 95 °C erhitzt wird.

12. Verfahren nach mindestes einem der vorhergehenden Ansprüche, **dadurch gekennzeichnet, dass** die Temperatur der Schritte (h) und (i) gleich ist.

13. Verfahren nach mindestes einem der vorhergehenden Ansprüche, **dadurch gekennzeichnet, dass** die Heißhaltung des Schrittes (j) über einen Zeitraum von etwa 3 bis etwa 8 Minuten erfolgt.

14. Nahrungsmittelprodukt zum Heißverzehr umfassend ein veganes Lebensmittelprodukt nach mindestens einem der Ansprüche 1 bis 7 oder erhältlich durch das Verfahren der Ansprüchen 8 bis 13.

15. Nahrungsmittelprodukt nach Anspruch 14, wobei das Nahrungsmittelproduckt ausgewählt aus der Gruppe bestehend aus Pizza, Pasta, Lasagne, Croque Monsieur, Käseburger, Gratin, Fondue, Hot Dog, Waffel, Sandwich, Wrap, gebackener Käse, Tortilla Chip oder Käsesauce ausgewählt ist.
